# EUROPEAN PATENT SPECIFICATION

(11) **EP 3 153 772 B1**
(45) Date of publication and mention of the grant of the patent: **26.09.2018**
(21) Application number: 16192284.4
(22) Date of filing: 04.10.2016
(51) Int. Cl.: F21V 31/00, G02B 19/00, F21V 5/04, F21V 17/12, F21Y 115/10, F21W 111/06

(54) **LIGHT INDICATOR**
LEUCHTENDES ANZEIGEGERÄT
INDICATEUR LUMINEUX

(30) Priority: 05.10.2015 IT UB20157452 U
(43) Date of publication of application: 12.04.2017
(73) Proprietor: C&E GROUP SRL, 23848 Oggiono - Lecco (LC) (IT)
(72) Inventor: DI GIOVINE, Alfonso, I-23848 Oggiono (Lecco) (IT); DI GIOVINE, Maria Cristina, I-23900 Lecco (LC) (IT)
(74) Representative: Gallo, Luca

(56) References cited:
- EP-A1- 2 878 878
- CN-U- 203 190 312
- KR-Y1- 200 473 501
- US-A1- 2004 004 836
- US-A1- 2005 007 784
- US-B1- 6 483 439
- Anonymous: "Aviation Obstruction Lights & Beacons_LED Low-intensity Obstruction Aviation Light Type A (SS-L810A)-Shenzhen Star Standard Electromechanical Facilities Engineering Co., Ltd.-", , 3 June 2015 (2015-06-03), XP055318209, Retrieved from the Internet: URL:https://web.archive.org/web/2015060302 3630/http://www.star-standard.com/Product/ show-7-110-1.html [retrieved on 2016-11-10]

## Description

### Field of application

The present finding refers to a light indicator, according to the preamble of the independent claim.

The present light indicator is inserted in the industrial field of production of light indicators and illumination apparatuses in particular provided with light sources of LED type, and is intended to be advantageously employed for indicating to aircraft the presence of high structures, such as smokestacks, towers, skyscrapers, bridges, power line pylons, etc.

In particular, the aforesaid light indicator is advantageously employed for signaling the presence of towers or other high buildings, especially those situated in urban areas.

### State of the art

It is known to use light indicators mounted for example on towers, on smokestacks or on industrial plant and factory buildings, or on bridges, pylons etc., in order to indicate the presence of aerial obstacles to vehicles such as airplanes and helicopters.

In particular, increasingly widespread on the market are light indicators provided with light sources of LED type, since the latter demonstrate greater luminous efficiency than most of the light sources of conventional type (such as incandescent lamps, fluorescent lamps, discharge lamps).

More in detail, one example light indicator of known type comprises a metal tubular body, which is provided with an external surface on which a plurality of LEDs are mounted; each LED is oriented with its light emission axis orthogonal to the external surface of the tubular body.

In addition, the light indicator comprises a plurality of lenses, each of which fixed on the external surface of the tubular body in front of the LED, intercepting the light emission axis of the latter, and adapted to concentrate the light emitted by such LED into light beams mainly oriented along a horizontal optical axis.

More in detail, each lens comprises a substantially hemispherical body of transparent material, provided with an internal cavity in which the corresponding LED is housed, and with a base edge fixed to the external surface of the tubular body around the LED itself.

In particular, each lens is fixed to the external surface of the tubular body of the light indicator by means of an adhesive material layer arranged between the base edge of the lens and the external surface of the tubular body.

The indicator also comprises a cylindrical transparent plate, which is arranged around the external surface of the tubular body to protect the LEDs and defines, with such external surface, an air space in which the LEDs themselves and the respective lenses are housed.

In addition, the transparent plate is closed on the top and bottom, respectively, by an upper cover and by a lower cover fixed to the corresponding ends of the tubular body itself and provided with corresponding annular grooves in which the corresponding edge of the transparent plate is inserted.

In particular, the upper cover and lower cover are provided with corresponding annular sealing gaskets, each of which arranged in the annular groove of the corresponding cover in order to prevent the entrance of water or humidity inside the air space where the LEDs are housed.

One drawback of the above-described light indicator of known type is due to the fact that it is structurally complex, in that it requires the attainment of the transparent protection plate, of suitable covers with the corresponding gaskets for protecting the LEDs from weathering agents, with consequent increase of production costs of the indicator itself. In addition, such structural complexity requires the execution of various operations for mounting the different components of the indicator, with consequent long times for the assembly of the indicator itself.

A further drawback of the above-described indicator of known type is due to the fact that, following for example the wear of the sealing gaskets, weathering agents (such as water or humidity) can easily enter into the air space where the LEDs are housed, coming into contact with the latter and thus causing damage or malfunctioning of the indicator itself.

A light indicator comprising a cap-like shaped lens fixed on a support base and having the features of the preamble of claim 1 is known from URL "http://www.star-standard.com/Product/show-7-110-l.html".

### Presentation of the finding

In this situation, the essential object of the present finding is therefore that of overcoming the drawbacks manifested by the solutions of known type, by providing a light indicator that is structurally simple and inexpensive to make.

Further object of the present finding is to provide a light indicator capable of operating in an entirely efficient manner.

Further object of the present finding is to provide a light indicator that is easy to assemble.

The invention provides a light indicator according to claim 1.

### Brief description of the drawings

The technical characteristics of the finding, according to the aforesaid objects, can be clearly seen in the contents of the below-reported claims and the advantages thereof are more evident from the following detailed description, made with reference to the enclosed drawings, which represent several merely exemplifying and non-limiting embodiments of the invention, in which:

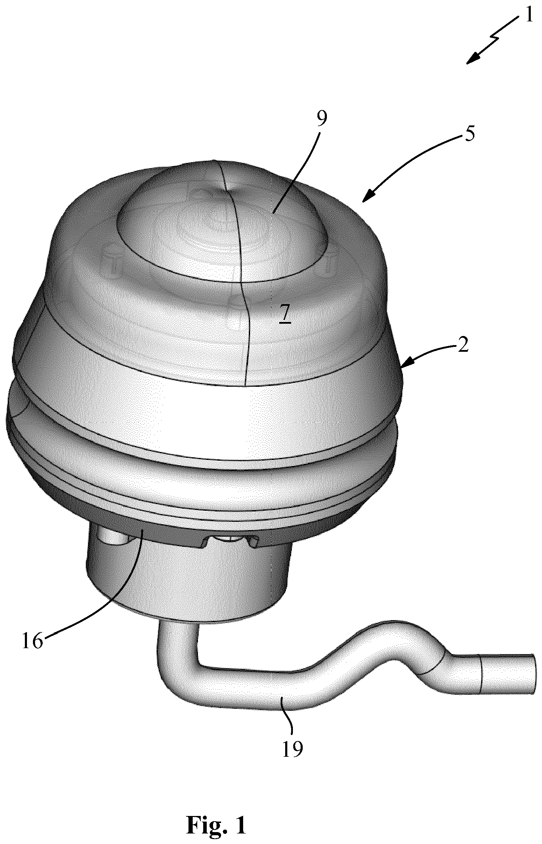

- figure 1 shows a perspective view of the light indicator, object of the present finding;

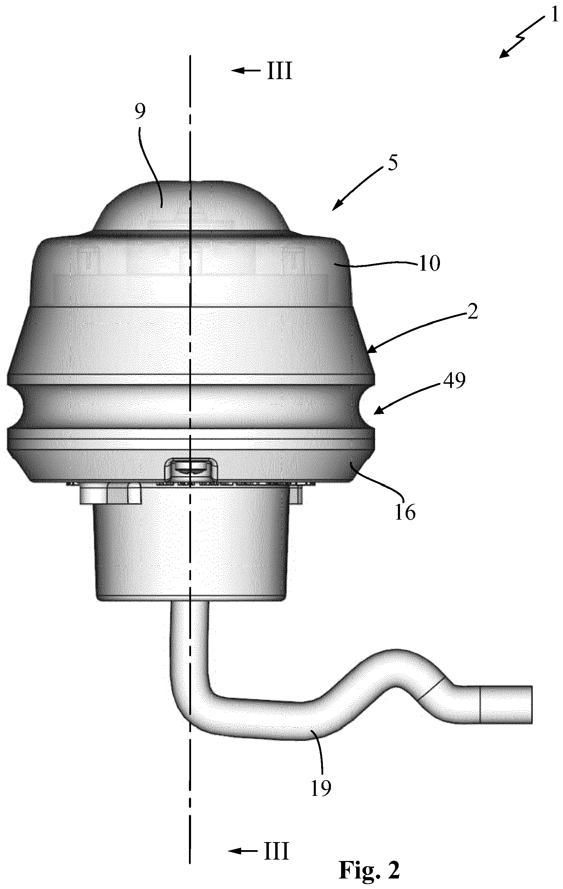

- figure 2 shows a side view of the light indicator illustrated in figure 1;
- figure 3 shows a sectional view of the light indicator illustrated in figure 2 according to line III - III of the figure 2 itself;

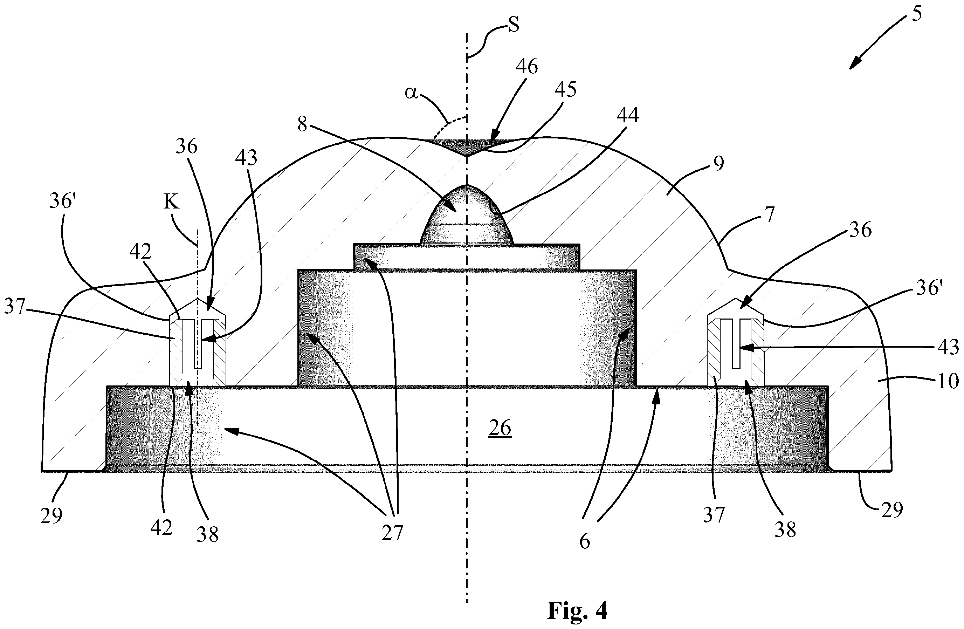

- figure 4 shows a sectional view of a detail of the light indicator illustrated in figure 3 relative to an optical lens;

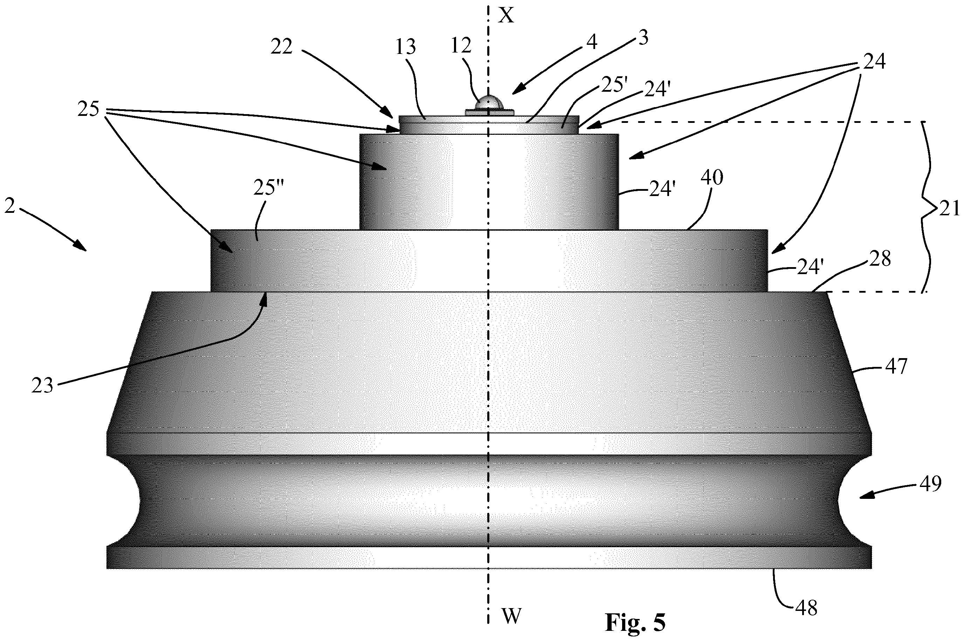

- figure 5 shows a side view of a detail of the light indicator illustrated in figure 2, relative to a support body and to a light source;
- figures 6 and 7 illustrate the present light indicator installed on two corresponding different support structures.

### Detailed description of a preferred embodiment

With reference to the enclosed drawings, reference number 1 overall indicates the light indicator, object of the present finding.

The present light indicator 1 is intended to be advantageously mounted on high buildings (such as skyscrapers, towers, etc.) or on high structures (such as bridges, pylons, smokestacks etc.) in order to indicate the presence of aerial obstacles to vehicles such as airplanes and helicopters.

According to the present finding, the light indicator 1 comprises a support body 2 provided with a support face 3, at which a light source 4 is arranged that is provided with a light emission axis X preferably orthogonal to the support face 3 itself and in particular substantially vertical.

The support face 3 of the support body 2 is advantageously preferably flat and is preferably intended to be directed upward and arranged in particular horizontally.

The light indicator 1 comprises an optical lens 5 which is placed to cover the support face 3, on which the light source 4 is arranged, and is provided with an internal surface 6 and with an external surface 7 intended to come into contact with the external environment. The internal surface 6 of the optical lens 5 is at least partially directed towards such support face 3 and defines a cavity 8 in which the light source 4 is housed. More in detail, the optical lens 5 comprises a collimation portion 9, preferably central, placed to intercept the light emission axis X of the light source 4, and arranged for at least partially intercepting the light rays emitted by the light source 4 and for projecting corresponding collimated light beams according to at least one projection direction Y orthogonal to the aforesaid light emission axis X and in particular substantially horizontal.

Advantageously, the collimation portion 9 of the optical lens 5 is arranged for projecting the light beams along projection directions Y that are radial with respect to the light emission axis X and preferably over a 360° angle around such light emission axis X. According to the finding, the optical lens 5 comprises an attachment portion 10, preferably peripheral, projectingly extended around the collimation portion 9 of the optical lens 5 itself, integrally made with such collimation portion 9, and sealingly fixed to the support body 2.

In addition, the light indicator 1 comprises retention means 11 connected to the support body 2 and to the attachment portion 10 of the optical lens 5 and adapted to retain the optical lens 5 integral with the support body 2.

Advantageously, the optical lens 5 of the light indicator 1 according to the finding allows protecting the light source 4 from weathering agents (such as rain, humidity, etc.) and simultaneously allows collimating the light rays emitted by the light source 4 according to the desired projection direction Y, hence involving a structural simplification of the light indicator 1, in particular without having to arrange further covers for protecting the light source 4.

Advantageously, the light indicator 1 comprises a control unit 100 arranged inside the support body 2 and electrically connected to the light source 4 in order to actuate the latter by means of first electrical connections (not illustrated in the enclosed figures). The control unit 100 is intended to be connected, in particular by means of second electrical connections (not illustrated), to an electrical energy source from which it receives the electric current for power supplying the light source 4 of the light indicator 1. Advantageously, the light source 4 comprises at least one LED 12 arranged in particular for emitting the light rays over a propagation angle of 360° around the light emission axis X of the light source 4 itself, preferably with a light emission cone comprised between about 120° and 180°.

Advantageously, the light source 4 comprises a circuit board 13 provided with a rear face fixed to the support face 3 of the support body 2, and with a front face on which the LED 12 is fixed.

In particular, the circuit board 13 comprises a printed circuit, in particular of metal core type, on which metal tracks (not illustrated) are preferably made that are adapted to connect the LED 12 mounted on the circuit board 13 to the first electrical connections connected to the control unit 100.

Advantageously, the support body 2 of the light indicator 1 is extended around an extension axis W, preferably with central symmetry with respect to such extension axis W, and in particular is made of metal material, e.g. anodized aluminum.

In particular, the support body 2 is provided at its interior with a housing seat 14, within which the control unit 100 is preferably contained.

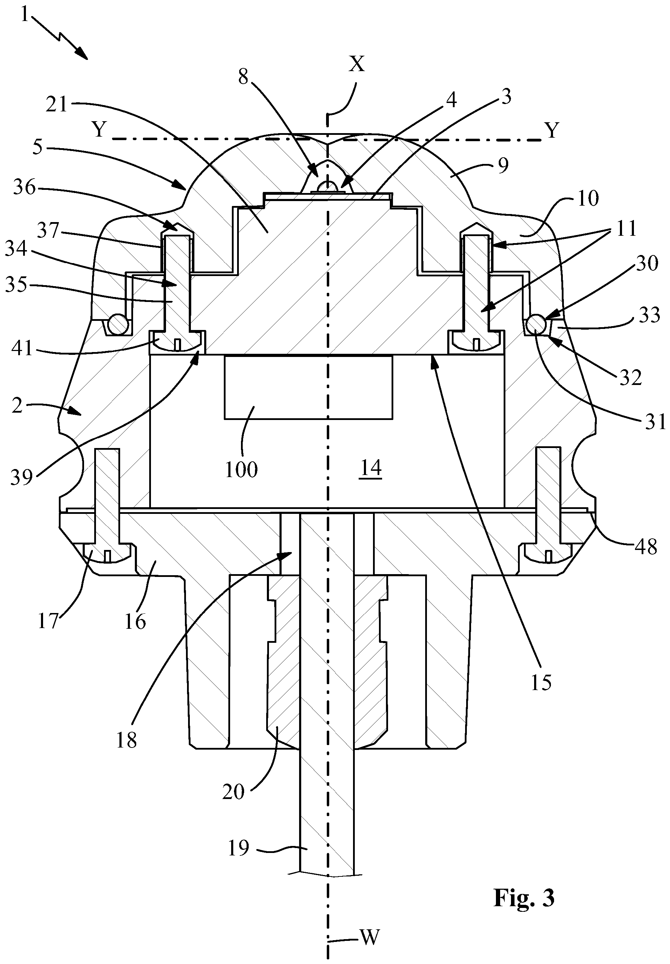

In accordance with the embodiment illustrated in figure 3, the support body 2 is provided with an internal face 15, which is directed in the direction opposite the support face 3 (on which the light source 4 is placed) and in particular on the top it delimits the housing seat 14 of the support body 2 itself.

The housing seat 14 of the support body 2 is closed on the bottom by a bottom cover 16 fixed to the support body 2 preferably by means of fixing screws 17.

Preferably, the bottom cover 16 is provided with a through hole 18 traversed by an electrical duct 19 containing the second electrical connections adapted to connect the electrical energy source to the control unit 100 of the light indicator 1. The through hole 18 of the bottom cover 16 is suitably obstructed by means of a cable gland 20 inserted in the through hole 18 and arranged around the electrical duct 19.

Advantageously, the support body 2 comprises a projecting portion 21 preferably placed as an upper closure of the housing seat 14 of the support body 2, in particular internally delimiting, towards the housing seat 14, the aforesaid internal face 15 of the support body 2 itself.

The aforesaid projecting portion 21 is externally and projectingly extended according to the extension axis W, which has at least one component parallel to the light emission axis X of the light source 4 and is preferably orthogonal to the support face 3 at which the light source 4 is placed.

More in detail, the projecting portion 21 of the support body 2 is extended according to the extension axis W between an apical end 22, preferably upper, on which the support face 3 is arranged, and a base end 23, preferably lower.

In addition, the projecting portion 21 is provided with at least one lateral surface 24, with preferably cylindrical shape, extended around the extension axis W and arranged in particular orthogonal to the support face 3.

In accordance with the embodiment illustrated in the enclosed figures, the projecting portion 21 comprises multiple steps 25 arranged one on top of the other, in accordance with the embodiment of figure 3.

Each step 25 delimits a corresponding area 24' of the lateral surface 24 of the projecting portion 21 of the support body 2.

In particular, the steps 25 are arranged one on top of the other, aligned with each other with respect to the extension axis W and with width increasing from the upper to the lower step.

In accordance with the embodiment of figure 3, the steps 25 of the projecting portion 21 of the support body 2 comprise a top step 25', at the top delimited by the apical end 22 of the projecting portion 21, and a base step 25", preferably wider, at the lower part delimited by the base end 23 of the projecting portion 21.

In accordance with different embodiments of the present finding, not illustrated in the enclosed figures, the projecting portion 21 of the support body 2 can also comprise only one step 25, i.e. the areas 24' of the lateral surface 24 can have shape that is not cylindrical (e.g. parallelepiped, frustoconical, trapezoidal, concave, etc.), without departing from the scope of the present patent.

Advantageously, the attachment portion 10 of the optical lens 5 is extended from the collimation portion 9 at least to cover the lateral surface 24 of the projecting portion 21, in particular extended around the extension axis W and being extended from the collimation portion 9 substantially in the form of bent band arranged around the lateral surface 24 of the projecting portion 21 itself.

The optical lens 5 is advantageously placed to cover the projecting portion 21 of the support body 2, with the attachment portion 10 which in particular is extended as base widening from the collimation portion 9.

Advantageously, the internal surface 6 of the optical lens 5 has concave form in a manner such to house, at its interior, the projecting portion 21 of the support body 2. Preferably, the attachment portion 10 of the optical lens 5 is provided on the internal surface 6 of the latter with an internal cavity 26 that is counter-shaped with respect to the projecting portion 21.

In particular, the internal cavity 26 of the attachment portion 10 is provided with one or more peripheral seats 27, preferably with annular form, counter-shaped with respect to the corresponding steps 25 of the projecting portion 21.

Advantageously, the support body 2 comprises an abutment surface 28 extended around the base end 23 of the projecting portion 21, directed towards the optical lens 5 and tilted with respect to the extension axis W of the support body 2 itself. Preferably, the abutment surface 28 of the support body 2 is radially and projectingly extended (with respect to the extension axis W) from the base end 23 of the projecting portion 21 and is arranged in particular orthogonal to the extension axis W with preferably annular form. The attachment portion 10 of the optical lens 5 is provided with a base surface 29, preferably with annular form, and placed on the abutment surface 28 of the support body 2 in sealing relationship with the abutment surface 28 itself.

Preferably, the base surface 29 of the attachment portion 10 of the optical lens 5 delimits, on the lower part, the attachment portion 10 itself and is arranged in particular orthogonal to the extension axis W of the support body 2.

Advantageously, the light indicator 1 comprises sealing means 30 interposed between the attachment portion 10 of the optical lens 5 and the support body 2, in order to facilitate the hermetic insulation of the light source 4 (and preferably of the control unit 100 and electrical connections) from the external environment.

In particular, the sealing means 30 are interposed between the abutment surface 28 of the support body 2 and the base surface 29 of the attachment portion 10 of the optical lens 5.

Preferably, the sealing means 30 comprise an annular seal 31 compressed between the abutment surface 28 of the support body 2 and the base surface 29 of the attachment portion 10 of the optical lens 5, and extended around the extension axis W of the support body 2.

Advantageously, the annular seal 31 is housed in an annular seat 32 made on the abutment surface 28 of the support body 2.

In particular, the annular seat 32 is at least partially directed towards the base surface 29 of the attachment portion 10 of the optical lens 5 and is peripherally limited by an annular shoulder 33 of the support body 2 arranged around the annular seal 31 itself. The retention means 11 of the light indicator 1 (which retain the optical lens 5 integral with the support body 2) comprise one or more retention bodies 34, each of which provided with a rod-like threaded portion 35, engaged in retention relationship within a corresponding engagement seat 36 made in the attachment portion 10 of the optical lens 5.

In particular, the aforesaid engagement seats 36 are made on the internal surface 6 of the optical lens 5 and, advantageously, each comprise a hole, preferably blind, with axis parallel to the extension axis W of the support body 2 and peripherally delimited by a lateral wall 36' of the engagement seat 36 itself.

Advantageously, the retention means 11 comprise one or more engagement elements 37, each inserted within the corresponding engagement seat 36 and provided with a threaded hole 38 with axis K preferably parallel to the extension axis W of the support body 2. The threaded portion 35 of the corresponding retention body 34 is screwed in such threaded hole 38.

Advantageously, the threaded portion 35 of each retention body 34 is inserted in a corresponding through hole 39 made in the support body 2, preferably in the projecting portion 21 of the support body 2, and in particular in the base step 25" of the projecting portion 21.

In particular, each through hole 39 is extended between the internal face 15 of the support body 2 and an external face 40 of the projecting portion 21 (directed in the direction opposite the aforesaid internal face 15) and advantageously defining the top of one of the steps 25 of the projecting portion 21 and in particular the top of the base step 25" of the projecting portion 21 itself.

Each retention body 34 comprises an abutment portion 41 thrustingly operating against the internal face 15 of the support body 2, in a manner such that the threaded portion 35 of the retention body 34, being engaged with the corresponding engagement element 37, retains the optical lens 5 attached to the support body 2.

Preferably, in accordance with the embodiment illustrated in the enclosed figures, each retention body 34 comprises a corresponding retention screw provided with a shank, which constitutes the threaded portion 35 of the corresponding retention body 34, and with a head which constitutes the abutment portion 41 of the retention body 34 itself. Advantageously, each engagement element 37 has substantially tubular shape extended, parallel to the axis K of the corresponding threaded hole 38, between two end edges 42 thereof.

In particular, each engagement element 37 comprises an internally threaded bush made of metal material, e.g. brass.

Advantageously, the threaded portion 35 of each retention body 34 is arranged in order to thrustingly operate against the corresponding engagement element 37 according to a direction of radial thrust with respect to the axis K of the corresponding threaded hole 38. In this manner, the threaded portion 35 of the retention body 34 compresses the corresponding engagement element 37 against the lateral wall 36' of the corresponding engagement seat 36 in order to retain the engagement element 37 fixed to the lateral wall 36' of the corresponding engagement seat 36.

Advantageously, each engagement element 37 is provided with at least one longitudinal slit 43 parallel to the axis K of the threaded hole 38 of the engagement element 37 and extended from one of the end edges 42 of the engagement element 37 itself.

In particular, each engagement element 37 is provided with at least two aforesaid longitudinal slits 43, preferably arranged in symmetric position with respect to the axis K of the threaded hole 38.

The aforesaid longitudinal slits 43 advantageously allow the engagement element 37 to be radially widened under the action of the aforesaid thrust force exerted by the threaded portion 35 of the corresponding retention body 34, such that the engagement element 37 can be pressed against the lateral wall 36' of the corresponding engagement seat 36.

Preferably, the optical lens 5 of the light indicator 1 is made of polymer material, in particular polycarbonate.

Advantageously, the optical lens 5 of the light indicator 1 is provided with a central axis of symmetry S preferably aligned with the light emission axis X of the light source 4.

The cavity 8 of the optical lens 5, in which the light source 4 is housed, is preferably arranged aligned with the aforesaid central axis of symmetry S and is delimited by a curved surface 44 susceptible of being intercepted by the light rays emitted by the light source 4, in a manner such that at least part of such light rays reaches, via refraction, the external surface 7 of the optical lens 5.

Preferably, the collimation portion 9 of the optical lens 5 is shaped, on the external surface 7, substantially cap-like.

Advantageously, the external surface 7 of the optical lens 5 is provided with an interception zone 45, substantially frustoconical, made on the collimation portion 9, and extended symmetrically around the central axis of symmetry S of the optical lens 5. Such interception zone 45 is arranged for intercepting at least one part of the light rays emitted by the light source 4 and for projecting the corresponding collimated beams radially with respect to the central axis of symmetry S of the optical lens 5.

In particular, the aforesaid interception zone 45 of the external surface 7 of the optical lens 5 delimits a central concavity 46 of the external surface 7 itself, extended around the central axis of symmetry S.

Preferably, the interception zone 45 of the external surface 7 is extended around the central axis of symmetry S with a generatrix section tilted a specific angle α with respect to the central axis of symmetry S, comprised between about 60° and 80° and equal to about 70°.

Preferably, the generatrix section of the interception zone 45 has a curved progression or linear progression with sections that approximate a curved line.

Advantageously, the interception zone 45 of the external surface 7 of the collimation portion 9 of the optical lens 5 is adapted to project the collimated light beams along projection directions Y that are radial with respect to the central axis of symmetry S and preferably over an angle of 360° around such central axis of symmetry S.

Preferably, the collimated light beams projected from the collimation portion 9 of the optical lens 5 have vertical aperture angle of about 10°, in particular of about 15°.

Suitably, one part, preferably smaller, of the light rays (coming from the light source 4) intercepted by the collimation portion 9 of the optical lens 5 are projected from the external surface 7 of the latter with light beams propagated within an emission cone having axis coinciding with the light emission axis X, in particular such to project such light beams upward.

Advantageously, the support body 2 of the light indicator 1 is provided with an external lateral side 47, extended outside the optical lens 5 and extended around the extension axis W of the support body 2 itself.

In particular, the aforesaid external lateral side 47 of the support body 2 is extended, according to the extension axis W, between the abutment surface 28 of the projecting portion 21 and a lower edge 48 of the support body 2 itself, the bottom cover 16 being abuttingly arranged against such lower edge 48.

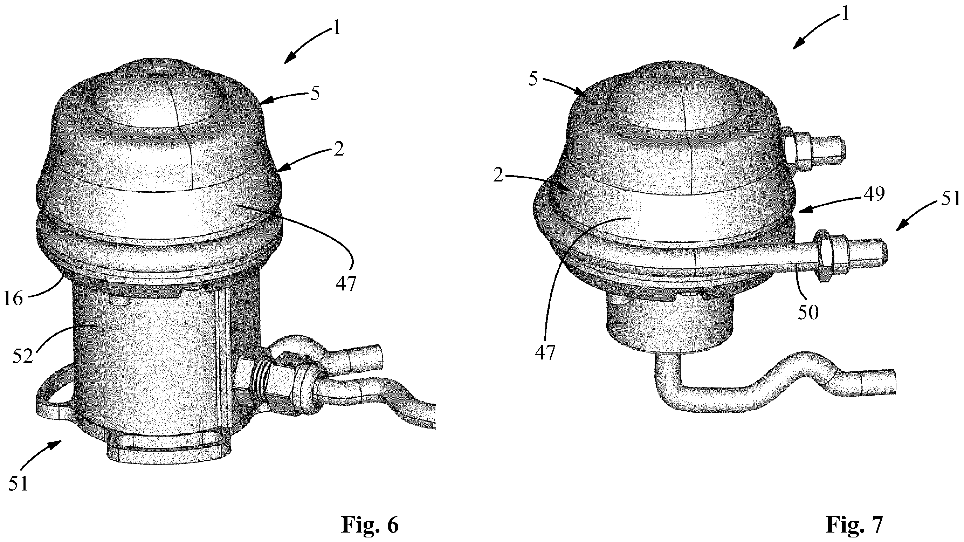

Advantageously, the external lateral side 47 of the support body 2 is provided with an annular groove 49, and along one section thereof a curved element 50 of a support structure 51 is susceptible of being engaged, on which the light indicator 1 is intended to be mounted, as illustrated in the example of figure 7.

The aforesaid curved element 50 comprises preferably a U-shaped threaded bracket (also termed "U bolt"), made for example of metal material.

Of course, the light indicator 1 is susceptible of being fixed to support structures 51 different from those provided with U-shaped brackets, and can for example be mounted on an abutment base 52 fixed to the bottom cover 16 of the light indicator 1 itself, as illustrated in the example of figure 6.

The finding thus conceived therefore attains the pre-established objects.

In particular, the optical lens 5 provided with the collimation portion 9 and with the attachment portion 10 according to the present finding allows protecting the light source 4 and advantageously the electrical and electronic components of the light indicator 1 without having to use further cover elements, with a consequent structural simplification of the light indicator 1 itself.

## Claims

1. Light indicator (1), which comprises:
- a support body (2) provided with a support face (3);
- at least one light source (4) arranged at said support face (3) and provided with a light emission axis (X);
- at least one optical lens (5), which is placed to cover said support face (3), is provided with an internal surface (6) at least partially directed towards said support face (3) and defining at least one cavity (8) in which said light source (4) is housed, and is provided with an external surface (7) intended to come into contact with the external environment;
said optical lens (5) comprising:
- at least one collimation portion (9) placed to intercept the light emission axis (X) of said light source (4), and arranged for at least partially intercepting light rays emitted by said light source (4) and for projecting corresponding collimated light beams along projection directions (Y) that are radial with respect to said light emission axis (X);
- at least one attachment portion (10), projectingly extended around said collimation portion (9), integrally made with said collimation portion (9), and sealingly fixed to said support body (2);
- retention means (11) connected to said support body (2) and to the attachment portion (10) of said optical lens (5) and adapted to retain said optical lens (5) integral with said support body (2);
said light indicator (1) being **characterized in that** said retention means (11) comprise:
- at least one retention body (34) provided with a rod-like threaded portion (35), engaged in retention relationship within a corresponding engagement seat (36) made in the attachment portion (10) of said optical lens (5) and **in that** said retention means (11) comprise
- at least one engagement element (37) inserted within said engagement seat (36) and provided with a threaded hole (38) with axis (K), and the threaded portion (35) of said retention body (34) is screwed in such threaded hole (38).

2. Light indicator (1) according to claim 1, **characterized in that** said support body (2) comprises a projecting portion (21) which:
- is projectingly and externally extended according to an extension axis (W), having at least one component parallel to the light emission axis (X) of said light source (4), between an apical end (22), on which said support face (3) is arranged, and a base end (23),
- and is provided with at least one lateral surface (24) extended around said extension axis (W);
the attachment portion (10) of said optical lens (5) being extended from said collimation portion (9) at least to cover the lateral surface (24) of said projecting portion (21).

3. Light indicator (1) according to claim 2, **characterized in that** said optical lens (5) is placed to cover said projecting portion (21).

4. Light indicator (1) according to claim 2 or 3, **characterized in that** the attachment portion (10) of said optical lens (5) is provided on said internal surface (6) with at least one internal cavity (26) that is counter-shaped with respect to said projecting portion (21).

5. Light indicator (1) according to any one of the preceding claims 2 to 4, **characterized in that** said support body (2) comprises at least one abutment surface (28) extended around the base end (23) of said projecting portion (21) and directed towards said optical lens (5);
the attachment portion (10) of said optical lens (5) being provided with a base surface (29) placed on the abutment surface (28) of said support body (2) in sealing relationship with said abutment surface (28).

6. Light indicator (1) according to any one of the preceding claims, **characterized in that** it comprises sealing means (30) interposed between the attachment portion (10) of said optical lens (5) and said support body (2).

7. Light indicator (1) according to claims 5 and 6, **characterized in that** said sealing means (30) are interposed between the abutment surface (28) of said support body (2) and the base surface (29) of the attachment portion (10) of said optical lens (5).

8. Light indicator (1) according to any one of the preceding claims, **characterized in that** the threaded portion (35) of said retention body (34) is arranged in order to thrustingly operate, according to a direction of radial thrust with respect to the axis (K) of said threaded hole (38), against said engagement element (37), compressing the latter against a lateral wall (36') of said engagement seat (36).

9. Light indicator (1) according to claim 8, **characterized in that** said engagement element (37) has substantially tubular shape extended, parallel to the axis (K) of said threaded hole (38), between two end edges (42) thereof, and is provided with at least one longitudinal slit (43) parallel to said axis (K) and extended from one of said end edges (42).

10. Light indicator (1) according to any one of the preceding claims, **characterized in that** the threaded portion (35) of said retention body (34) is inserted in a corresponding through hole (39) made in said support body (2), and said retention body (34) comprises an abutment portion (41) thrustingly operating against an internal face (15) of said support body (2) directed in the direction opposite the support face (3) of said support body (2).

11. Light indicator (1) according to any one of the preceding claims 8 to 10, **characterized in that** said engagement seat (36) is made on the internal surface (6) of said optical lens (5).

12. Light indicator (1) according to any one of the preceding claims, **characterized in that** said optical lens (5) is provided with a central axis of symmetry (S) aligned with the light emission axis (X) of said light source (4);
the external surface (7) of said optical lens (5) being provided with an interception zone (45) made on said collimation portion (9), extended symmetrically around said central axis of symmetry (S), and arranged for intercepting at least one part of the light rays emitted by said light source (4) and for projecting corresponding said collimated light beams radially with respect to said central axis of symmetry (S).

13. Light indicator (1) according to any one of the preceding claims, **characterized in that** the collimation portion (9) of said optical lens (5) has substantially cap-like shape.

## Patentansprüche

1. Leuchtendes Anzeigegerät (1), das Folgendes umfasst:
- einen mit einer Trägerfläche (3) ausgestatteten Trägerkörper (2);
- mindestens eine auf der genannten Trägerfläche (3) angeordnete und mit einer Lichtemissionsachse (X) ausgestattete Lichtquelle (4);
- mindestens eine als Abdeckung der genannten Trägerfläche (3) platzierte, mit einer mindestens teilweise zu der genannten Trägerfläche (3) gerichteten Innenfläche (6) ausgestattete und mindestens einen Hohlraum (8), in dem die genannte Lichtquelle (4) untergebracht ist, definierende optische Linse (5), die mit einer Außenfläche (7) ausgestattet ist, für den Kontakt mit der Außenumgebung bestimmt ist;
wobei die genannte optische Linse (5) Folgendes umfasst:
- mindestens einen die Lichtemissionsachse (X) der genannten Lichtquelle (4) schneidend platzierten und so angeordneten Kollimationsabschnitt (9), dass er die von der genannten Lichtquelle (4) emittierten Lichtstrahl zumindest teilweise abfängt und entsprechende gebündelte Lichtstrahlen entlang Projektionsrichtungen (Y) projiziert, die in Bezug auf die genannte Lichtemissionsachse (X) radial verlaufen;
- mindestens einen Anbringungsabschnitt (10), der vorstehend um den genannten Kollimationsabschnitt (9) verläuft und in den genannten Kollimationsabschnitt (9) integriert und abdichtend an dem genannten Trägerkörper (2) befestigt ist;
- an dem genannten Trägerkörper (2) und dem Anbringungsabschnitt (10) der genannten optischen Linse (5) befestigte Haltevorrichtungen (11), die geeignet sind, die genannte, in den genannten Trägerkörper (2) integrierte optische Linse (5) zu halten;
wobei das genannte leuchtende Anzeigegerät (1) **dadurch gekennzeichnet ist, dass** die genannten Haltevorrichtungen (11) Folgendes umfassen:
- mindestens einen mit einem stangenähnlichen Gewindeabschnitt (35) versehenen Haltekörper (34), der sich in einem Rückhalteverhältnis in einem entsprechenden Verbindungssitz (36) in dem Anbringungsabschnitt (10) der optischen Linse (5) befindet und dadurch, dass die genannte Haltevorrichtung (11) Folgendes umfasst:
- mindestens ein in den genannten Verbindungssitz (36) eingesetztes und mit einer Gewindeöffnung (38) mit Achse (K) ausgestattetes Verbindungselement (37), wobei der Gewindeabschnitt (35) des genannten Haltekörpers (34) in dieser Gewindeöffnung (38) verschraubt ist.

2. Leuchtendes Anzeigegerät (1) nach Anspruch 1, **dadurch gekennzeichnet, dass** der genannte Trägerkörper (2) einen vorstehenden Abschnitt (21) umfasst, der:
- vorstehend und außen entlang einer Verlaufsachse (W) verläuft und mindestens eine Komponente parallel zu der Lichtemissionsachse (X) der genannten Lichtquelle (4) zwischen einem apikalen Ende (22), auf dem die genannte Trägerfläche (3) angeordnet ist, und einem Basisende (23) aufweist,
- und mit mindestens einer um die genannte Verlaufsachse (W) verlaufende Seitenfläche (24) ausgestattet ist;
Wobei der Anbringungsabschnitt (10) der genannten optischen Linse (5) über den genannten Kollimationsabschnitt (9) hinaus verläuft, um mindestens die Seitenfläche (24) des genannten vorstehenden Abschnitts (21) abzudecken.

3. Leuchtendes Anzeigegerät (1) nach Anspruch 2, **dadurch gekennzeichnet, dass** die genannte optische Linse (5) so platziert ist, dass sie den vorstehenden Abschnitt (21) abdeckt.

4. Leuchtendes Anzeigegerät (1) nach Anspruch 2 oder 3, **dadurch gekennzeichnet, dass** der Anbringungsabschnitt (10) der genannten optischen Linse (5) auf der genannten Innenfläche (6) mit mindestens einem inneren Hohlraum (26), der ein Gegenprofil in Bezug auf den vorstehenden Abschnitt (21) bildet, versehen ist.

5. Leuchtendes Anzeigegerät (1) nach einem beliebigen der vorangegangenen Ansprüche 2 bis 4, **dadurch gekennzeichnet, dass** der genannte Trägerkörper (2) mindestens eine um das Basisende (23) des genannten vorstehenden Abschnitts (21) herum verlaufende Auflagerfläche (28) umfasst, die zu der genannten optischen Linse (5) gerichtet ist;wobei der Anbringungsabschnitt (10) der genannten optischen Linse (5) mit einer auf der Auflagerfläche (28) des genannten Trägerkörpers (2) in einem abdichtenden Verhältnis mit der genannten Auflagerfläche (28) positionierten Basisfläche (29) ausgestattet ist.

6. Leuchtendes Anzeigegerät (1) nach einem beliebigen der vorangegangenen Ansprüche, **dadurch gekennzeichnet, dass** es zwischen dem Anbringungsabschnitt (10) der genannten optischen Linse (5) und dem genannten Trägerkörper (2) eingesetzte Dichtungselemente (30) umfasst.

7. Leuchtendes Anzeigegerät (1) nach Anspruch 5 und 6, **dadurch gekennzeichnet, dass** die genannten Dichtungselemente (30) zwischen der Auflagerfläche (28) des genannten Trägerkörpers (2) und der Basisfläche (29) des Anbringungsabschnitts (10) der genannten optischen Linse (5) eingesetzt sind.

8. Leuchtendes Anzeigegerät (1) nach einem beliebigen der vorangegangenen Ansprüche, **dadurch gekennzeichnet, dass** der Gewindeabschnitt (35) des genannten Haltekörpers (34) so angeordnet ist, um schiebend entlang einer Richtung radialen Schubs im Verhältnis zu der Achse (K) der genannte Gewindeöffnung (38) gegen das genannte Verbindungselement (37) betätigt zu werden und so Letzteres gegen eine Seitenwand (36') des genannten Verbindungssitzes (36) zusammen zu drücken.

9. Leuchtendes Anzeigegerät (1) nach Anspruch 8, **dadurch gekennzeichnet, dass** das genannte Verbindungselement (37) im Wesentlichen rohrförmig ist und parallel zu der Achse (K) der genannten Gewindeöffnung (38) zwischen zwei Rändern (42) derselben verläuft und mit mindestens einem Längsschlitz (43) parallel zu der genannten Achse (K) ausgestattet ist, der von einem der genannten Endränder (42) aus verläuft.

10. Leuchtendes Anzeigegerät (1) nach einem beliebigen der vorangegangenen Ansprüche, **dadurch gekennzeichnet, dass** der Gewindeabschnitt (35) des genannten Haltekörpers (34) in eine entsprechende Durchgangsöffnung (39) in dem genannten Haltekörper (2) eingesetzt ist und der genannte Haltekörper (34) einen Auflagerabschnitt (41) umfasst, der schiebend gegen eine Innenfläche (15) des genannten Stützkörpers (2) in die gegenüberliegende Richtung der Trägerfläche (3) des genannten Trägerkörpers (2) wirkt.

11. Leuchtendes Anzeigegerät (1) nach einem beliebigen der vorangegangenen Ansprüche 8 bis 10, **dadurch gekennzeichnet, dass** der genannte Verbindungssitz (36) auf der Innenfläche (6) der genannten optischen Linse (5) eingerichtet ist.

12. Leuchtendes Anzeigegerät (1) nach einem beliebigen der vorangegangenen Ansprüche, **dadurch gekennzeichnet, dass** die genannte optische Linse (5) mit einer mit der Lichtemissionsachse (X) der genannten Lichtquelle (4) ausgerichteten mittleren Symmetrieachse (S) ausgestattet ist;
wobei die Außenfläche (7) der genannten optischen Linse (5) mit einem Abfangbereich (45) auf dem genannten Kollimationsabschnitt (9) ausgestattet ist, der symmetrisch um die genannte mittlere Symmetrieachse (S) verläuft und so angeordnet ist, dass er mindestens einen Teil der von der genannten Lichtquelle (4) emittierten Lichtstrahlen abfängt und entsprechende genannte gebündelte Lichtstrahlen im Verhältnis zu der genannten mittleren Symmetrieachse (S) radial projiziert.

13. Leuchtendes Anzeigegerät (1) nach einem beliebigen der vorangegangenen Ansprüche, **dadurch gekennzeichnet, dass** der Kollimationsabschnitt (9) der genannten optischen Linse (5) eine im Wesentlichen kappenähnliche Form aufweist.

## Revendications

1. Indicateur lumineux (1) comprenant :
- un corps de support (2) muni d'une face de support (3) ;
- au moins une source de lumière (4) disposée sur ladite face de support (3) et munie d'un axe d'émission de lumière (X) ;
- au moins une lentille optique (5), placée de façon à couvrir ladite face de support (3), qui est munie d'une surface interne (6) au moins partiellement orientée vers ladite face de support (3) et définissant au moins une cavité (8) dans laquelle est logée ladite source de lumière (4), et munie d'une surface externe (7) destinée à entrer en contact avec l'environnement extérieur ;
ladite lentille optique (5) comprenant :
- au moins une partie de collimation (9) placée de façon à intercepter l'axe d'émission de lumière (X) de ladite source de lumière (4) et disposée pour intercepter, au moins partiellement, les rayons de lumière émis par ladite source de lumière (4) et pour projeter les correspondants faisceaux lumineux collimatés le long de directions de projection (Y) qui sont radiales par rapport audit axe d'émission de lumière (X) ;
- au moins une partie de fixation (10), s'étendant en saillie autour de ladite partie de collimation (9), réalisée d'une seule pièce avec ladite partie de collimation (9) et fixée de façon étanche audit corps de support (2) ;
- moyens de rétention (11) connectés audit corps de support (2) et à la partie de fixation (10) de ladite lentille optique (5) et aptes à retenir ladite lentille optique (5) intégrée dans ledit corps de support (2) ;
ledit indicateur lumineux (1) étant **caractérisé en ce que** lesdits moyens de rétention (11) comprennent :
- au moins un corps de rétention (34) muni d'une partie filetée de type tige (35), engagée dans un rapport de rétention à l'intérieur d'un correspondant siège d'engagement (36) réalisé dans la partie de fixation (10) de ladite lentille optique (5) et **en ce que** lesdits moyens de rétention (11) comprennent :
- au moins un élément d'engagement (37) inséré à l'intérieur dudit siège d'engagement (36) et muni d'un trou taraudé (38) avec axe (K), et la partie filetée (35) dudit corps de rétention (34) est vissée dans ledit trou taraudé (38).

2. Indicateur lumineux (1) selon la revendication 1, **caractérisé en ce que** ledit corps de support (2) comprend une partie en saillie (21) qui :
- est étendue en saillie et à l'extérieur selon un axe d'extension (W) ayant au moins un composant parallèle à l'axe d'émission de lumière (X) de ladite source de lumière (4), entre une extrémité apicale (22), sur laquelle est disposée ladite face de support (3) et une extrémité de base (23),
- et est munie d'au moins une surface latérale (24) s'étendant autour dudit axe d'extension (W) ;
la partie de fixation (10) de ladite lentille optique (5) s'étendant de ladite partie de collimation (9) à couvrir au moins la surface latérale (24) de ladite partie en saillie (21).

3. Indicateur lumineux (1) selon la revendication 2, **caractérisé en ce que** ladite lentille optique est placée de façon à couvrir ladite partie en saillie (21).

4. Indicateur lumineux (1) selon la revendication 2 ou 3, **caractérisé en ce que** la partie de fixation (10) de ladite lentille optique (5) est munie de ladite surface interne (6) avec au moins une cavité interne (26) qui est contre-formée par rapport à ladite partie en saillie (21).

5. Indicateur lumineux (1) selon l'une quelconque des revendications précédentes 2 à 4, **caractérisé en ce que** le corps de support (2) comprend au moins une surface d'appui (28) étendue autour de l'extrémité de base (23) de ladite partie en saillie (21) et orientée vers ladite lentille optique (5) ;
la partie de fixation (10) et ladite lentille optique (5) étant pourvues d'une surface de base (29) placée sur la surface d'appui (28) dudit corps de support (2) en rapport étanche avec ladite surface d'appui (28).

6. Indicateur lumineux (1) selon l'une quelconque des revendications précédentes, **caractérisé en ce qu'**il comprend des moyens d'étanchéité (30) interposés entre la partie de fixation (10) de ladite lentille optique (5) et ledit corps de support (2).

7. Indicateur lumineux (1) selon les revendications 5 et 6, **caractérisé en ce que** lesdits moyens d'étanchéité (30) sont interposés entre la surface d'appui (28) dudit corps de support (2) et la surface de base (29) de la partie de fixation (10) de ladite lentille optique (5).

8. Indicateur lumineux (1) selon l'une quelconque des revendications précédentes, **caractérisé en ce que** la partie filetée (35) dudit corps de rétention (34) est disposée de façon à fonctionner en mode de poussée, selon une direction de poussée radiale par rapport à l'axe (K) dudit trou taraudé (38), contre ledit élément d'engagement (37), comprimant ce dernier contre une paroi latérale (36') dudit siège d'engagement (36).

9. Indicateur lumineux (1) selon la revendication 8, **caractérisé en ce que** ledit élément d'engagement (37) a essentiellement une forme tubulaire étendue, parallèle à l'axe (K) dudit trou taraudé (38), entre deux bords terminaux (42) et est pourvu d'au moins une fente longitudinale (43) parallèle audit axe (K) et s'étendant d'un desdits bords terminaux (42).

10. Indicateur lumineux (1) selon l'une quelconque des revendications précédentes, **caractérisé en ce que** la partie filetée (35) dudit corps de rétention (34) est insérée dans un correspondant trou traversant (39) réalisé dans ledit corps de support (2) et ledit corps de rétention (34) comprend une partie d'appui (41) fonctionnant en mode de poussée contre une face interne (15) dudit corps de support (2) orientée vers la direction opposée à la face de support (3) dudit corps de support (2).

11. Indicateur lumineux (1) selon l'une quelconque des revendications précédentes 8 à 10, **caractérisé en ce que** ledit siège d'engagement (36) est réalisé sur la surface interne (6) de ladite lentille optique (5).

12. Indicateur lumineux (1) selon l'une quelconque des revendications précédentes, **caractérisé en ce que** ladite lentille optique (5) est pourvue d'un axe de symétrie central (S) aligné sur l'axe d'émission de lumière (X) de ladite source lumineuse (4) ;
la surface externe (7) de ladite lentille optique (5) étant pourvue d'une zone d'interception (45) réalisée sur ladite partie de collimation (9), étendue symétriquement autour dudit axe de symétrie central (S) et disposée pour intercepter au moins une partie des rayons lumineux émis par ladite source de lumière (4) et pour projeter ledit correspondant faisceau lumineux collimaté radialement par rapport audit axe de symétrie central (S).

13. Indicateur lumineux (1) selon l'une quelconque des revendications précédentes, **caractérisé en ce que** la partie de collimation (9) de ladite lentille optique (5) a essentiellement une forme de type calotte.
